# EUROPEAN PATENT APPLICATION

(11) **EP 2 562 191 A2**
(43) Date of publication of application: **27.02.2013**
(21) Application number: 12181924.7
(22) Date of filing: 27.08.2012
(51) Int. Cl.: C08F 220/06, B32B 27/30

(54) **Photopolymerizable coatings**

(30) Priority: 26.08.2011 US 201161528147 P; 16.09.2011 US 201161535931 P
(71) Applicant: Hu, Geoffrey, San Diego, CA 92069 (US)
(72) Inventor: Hu, Geoffrey, San Diego, CA 92069 (US)
(74) Representative: Purdy, Hugh Barry

(57) **Abstract**

A photopolymerizable coating composition and method for polyamide substrates, wherein the photopolymerizable coating composition consists of at least one acid-functional monomer with a molecular weight less than 240 g/m, at least one reactive crosslinking monomer and at least one photoinitiator. The coating compositions of the invention have improved adhesion to polyamide substrates, and also provide faster cure times and more effective protection from environmental insults as compared to prior art compositions.

## Description

### BACKGROUND OF THE INVENTION

### FIELD OF THE INVENTION

This invention relates to photopolymerizable coatings containing low molecular weight acid-functional monomers that have improved adhesion to polyamide polymers.

### DESCRIPTION OF THE RELATED ART

Polyamides are high performance engineering materials that find use in a broad range of applications including medical, automotive, aerospace, sporting goods, optics, and electronics. They are attractive because of their excellent physical properties, including toughness, flexibility and thermal stability. Additionally, polyamides display very good chemical resistance compared to many other engineering plastics.

Coatings are often used to increase the performance and functionality of polymeric materials. They are used to improve appearance and function as a barrier to gases, moisture and other liquids. Coatings also provide surface protection from scuffing, abrasion and scratching. Polyamides generally have good chemical resistance compared to many other polymer types. Unfortunately, it is often difficult for coatings to adhere well to the surface of polyamides.

Polyurethane-based coatings are often used on polyamides today. There is a variety of polyurethanes available at reasonable costs. However, the adhesion of polyurethane coatings to the polyamide is often insufficient to meet the performance needs of many end use applications. To mitigate this insufficient adhesion, the polyamide polymer is often subjected to a pretreatment in a separate step prior to the application of the functional coating. Pretreatments used include flame, plasma, high energy UV light, chemical oxidizers, and others. In spite of these extra process steps, however, the adhesion of coatings to polyamide polymers are often insufficient. Polyamides are durable materials that find use in many demanding applications. There is therefore a need in the market for coatings that bond more strongly to polyamide and maintain their bond under stressful conditions.

Polyurethane coatings also suffer from the use of toxic isocyanates compounds. Polyurethane coatings are created by the chemical reaction of isocyanates with polyol compounds. These two components are combined then applied to the substrate, typically in a solvent to help control the coating the viscosity and the final coating weight. Next, a thermal curing step is required to drive the polyurethane chemical reaction to completion. Without curing, the polyurethane will have markedly inferior physical properties. The thermal cure step typically requires an extended period of time in an oven or similar heated environment. Lastly, because organic solvents are commonly used in the polyurethane coating composition, the thermal baking step volatilizes a significant percentage of the coating's mass into the atmosphere. The organic solvent that evaporates from the coating during the thermal cure step must either be treated via an expensive volatile organic filtration or furnace system or it escapes to the greater atmosphere as a fugitive chemical that is a potential air pollutant.

Photocurable coating compositions are gaining wider usage as protective and functional coatings for metal, wood, plastic, glass, paper and other substrates. They are used to impart a particular property to the substrate surface such as slip, gloss, matte, color and texture. They are also used to protect the surface from wear, scratches, chemicals, light, moisture and other environmental insults. Typically, these coating compositions contain a reactive oligomer, a diluent monomer and a photoinitiator. Additional components can include polymers, inhibitors, pigments, dyes, surfactants, thixotropes, fillers, waxes, plasticizers, acid-containing oligomers, nanoparticles, defoamers, etc. depending on the final properties of the coating required.

Photopolymerizable compositions are a well known alternate approach to coating surfaces. Photopolymerizable compositions are being used more frequently to coat a wide range of different materials because of their numerous advantages. Firstly, they cure rapidly at room temperature. No heating or bake step is required. The photopolymerizable coatings can be cured in seconds. Another advantage in comparison to urethane coatings is that photopolymerizable coatings require no toxic isocyanates. Isocyanates are toxic by inhalation, ingestion and skin contact. Lastly, photopolymerizable coatings are termed 100% solids, which means they contain no diluting volatile organic solvents. Essentially, all of the components of a photopolymerizable composition end up being contained in the final cured coating. In contrast, urethane coatings typically contain 20-50% solvent. This solvent is inevitably lost to the surrounding atmosphere via evaporation during the heating step. Evaporated solvents can contribute to air pollution if engineering controls are not put in place to capture it. Such engineering controls required a considerable capital investment.

Photopolymerizable coating compositions, while quite versatile, are not always able to match the performance of all types of non-photocurable coatings in all applications. There are end uses involving certain types of polymer and metal substrates that require levels of performance not yet attainable in all regards via photopolymerizable coating technology. Polyamides are particularly difficult substrate on which to bond UV photopolymerizable coatings.

These shortcomings of the existing coating's technology for polyamides highlight the need for improved photopolymerizable coatings for polyamides substrates.

### BRIEF SUMMARY OF THE INVENTION

One or more embodiments of photopolymerizable coatings described herein are directed to an improved photopolymerizable composition for use in the coating of polyamide materials, wherein the composition includes between about 10 to about 99.9% of at least one acid-functional monomer with a molecular weight less than about 240 g/m, between about 1% to about 85% of at least one reactive crosslinking monomer, and 0.1 to 12% of at least one photoinitiator, wherein the reactive crosslinking monomer contains two or more acrylate or methacrylate functional groups. In one or more embodiments, the photopolymerizable compositions are applied to a polyamide substrate and exposed by sufficient actinic light to cause the coating to cure.

### DETAILED DESCRIPTION

A photopolymerizable coating composition will now be described. In the following exemplary description numerous specific details are set forth in order to provide a more thorough understanding of embodiments of the photopolymerizable coating compositions described herein. It will be apparent, however, to an artisan of ordinary skill that the present invention may be practiced without incorporating all aspects of the specific details described herein. Furthermore, although steps or processes are set forth in an exemplary order to provide an understanding of one or more systems and methods, the exemplary order is not meant to be limiting. One of ordinary kill in the art would recognize that the steps or processes may be performed in a different order, and that one or more steps or processes may be performed simultaneously or in multiple process flows without departing from the spirit or the scope of the invention. In other instances, specific features, quantities, or measurements well known to those of ordinary skill in the art have not been described in detail so as not to obscure the invention. Readers should note that although examples of the invention are set forth herein, the claims, and the full scope of any equivalents, are what define the metes and bounds of the invention.

The addition of acid-functional monomer with a molecular weight less than about 240 g/m to photopolymerizable coating formulations containing a reactive crosslinkable monomer and a photoinitiator greatly increases the adhesion of these coatings to polyamide substrates. In one or more embodiments, an acid-functional monomer with a molecular weight less than about 500 g/m, about 1000 g/m, or alternatively about 2000 g/m may be used.

The compositions described herein contain between about 10 to about 99.9% of at least one acid-functional monomer. One or more embodiments may contain between about 10% to about 95%, between 40% to about 60%, between about 60% to about 80%, between about 80% to about 99.9%, and/or between about 95% to 99.9% of the at least one acid-functional monomer.

Acid-functional monomers with molecular weights below 240 g/m include, vinyl phosphonic acid, hydroxyethyl methacrylate phosphate, hydroxyethyl acrylate phosphate, hydroxyethyl methacrylate sulfonate, monoacryloyloxyethyl succinate, monoacroyloxyethyl maleate, methacrylic acid, carboxyethyl acrylate, and acrylic acid. Acrylic acid is preferred.

The compositions described herein may contain between about 1% to about 85% of at least one reactive crosslinking monomer. In one or more embodiments, the compositions described herein may contain between about .05% to about 85% and/or between about 5% to about 20% of the at least one reactive crosslinking monomer.

Suitable non-limiting examples of reactive crosslinking monomers contemplated for use include, but are not limited to, trimethylolpropane triacrylate, 1,3-butylene glycol diacrylate, diethylene glycol diacrylate, 1,6-hexanediol diacrylate, neopentyl glycol diacrylate, polyethylene glycol 200 diacrylate, tetraethylene glycol diacrylate, triethylene glycol diacrylate, pentaerythritol tetraacrylate, pentaerythritol triacrylate tripropylene, glycol diacrylate, ethoxylated bisphenol-A diacrylate, propylene glycol di(meth)acrylate, trimethylolpropane diacrylate, di-trimethylolpropane tetraacrylate, triacrylate of tris(hydroxyethyl) isocyanurate, dipentaerythritol hydroxypentaacrylate, ethoxylated trimethylolpropane triacrylate, triethylene glycol dimethacrylate, ethylene glycol dimethacrylate, tetraethylene glycol dimethacrylate, polyethylene glycol-200 dimethacrylate, 1,6-hexanediol dimethacrylate, neopentyl glycol dimethacrylate, polyethylene glycol-600 dimethacrylate, 1,3-butylene glycol dimethacrylate, ethoxylated bisphenol-A dimethacrylate, trimethylolpropane trimethacrylate, diethylene glycol dimethacrylate, 1,4-butanediol diacrylate, diethylene glycol dimethacrylate, pentaerythritol tetramethacrylate, glycerin dimethacrylate, trimethylolpropane dimethacrylate, pentaerythritol trimethacrylate, pentaerythritol dimethacrylate, pentaerythritol diacrylate, urethane-methacrylate or acrylate oligomers and the like.

The compositions described herein may contain between about 0.1% to about 12% of at least one photoinitiator. In one or more embodiments, the compositions described herein may contain between about .01% to about 20% of the at least one photoinitiator.

Suitable non-limiting examples of photoinitiators for the photopolymerizable composition include benzophenone, acetophenone, 1-hydroxy cyclohexyl phenyl ketone (Irgacure 184), 2,2-dimethoxy-1,2-diphenylethan-1-one (Irgacure 651), bis(2,4,6-trimethylbenzoyl)phenylphosphineoxide , 1-[4-(2-hydroxyethoxy)phenyl]-2-hydroxy-2-methyl-1-propane-1-one, 2-benzyl-2-dimethylamino-1-(4-morpholinophenyl)butanone, 2-methyl-1-[4-(methylthio)phenyl]-2-morpholinopropan-1-one, and 2-hydroxy-2-methyl-1-phenyl propan-1-one (Irgacure 1173), and the like.

Other chemicals commonly found in photopolymerizable coating compositions can be used, including reactive monomers, oligomers, polymers, photoinitiators, inhibitors, dyes, plasticizers, surfactants, waxes, fillers, nanoparticles, light stabilizers, chain transfer agents, matting agents, acid-containing monomers, acid-containing oligomers, defoamers, and other additives as known to those skilled in the art.

Suitable non-limiting examples of oligomers usable include (meth)acrylate terminated aliphatic, aromatic urethane oligomers, polyester acrylate or methacrylate oligomers.

Light stabilizers may also be used: 2-hydroxy-benzophenones, 2-hydroxyphenyl benzotriazoles, hindered amines and organic nickel compounds. In addition, salicylates, cinnamate derivatives, resorcinol monobenzoates, oxanilides, and p-hydroxy benzoates are used as well.

Nanoparticles for the photopolymerizable composition include silica, aluminum oxide, zinc oxide, cesium oxide, barium oxide, titanium oxide, clay, and the like.

The photopolymerizable coating compositions may be applied to polyamide substrates in a variety of ways, for example, by roll coating, brushing, spraying, curtain coating, ink jetting, flexographic printing, dipping, and the like. These techniques can be readily carried out by those skilled in the art. The thickness of the photopolymerizable coating composition layer can range from about 0.1 mils to 4.0 mils, or more. The layer of photopolymerizable composition can be applied to the polyamide substrate as a sole coating layer or as the first of multiple coating layers.

The photocuring of the compositions is accomplished via dosages of actinic radiation. For curing to occur, the actinic radiation needs to include wavelengths of electromagnetic energy capable of being absorbed in sufficient amounts by at least one of the photoinitiators used in the photopolymerizable coating's formula. The source of the actinic radiation can be broadband or monochromatic in nature, or a combination of both. The actinic radiation can be produced by arc, plasma, laser or other means. Acceptable actinic radiation sources for the curing of the compositions include Hg lamps, xenon lamps, arc lamps, fluorescent lamps, LED's, tripled YAG lasers, ion lasers, gas lasers, diode lasers, sun light, and the like. The actinic radiation for the photocuring can be provided by a single source or a plurality of sources arranged either in parallel or series. The actinic radiation can be delivered to the coating composition in either a continuous or pulsed manner. The dose of actinic radiation sufficient to cure the compositions can be delivered at a high intensity over a shorter period of time, or at low intensity over a longer period of time. Higher intensity doses over a shorter period of time are preferred.

The coatings can be cured in ambient air or under a gas such as nitrogen, argon, and helium, or blends thereof. The atmosphere used during the cure step can be at full atmospheric pressure or reduced pressure. Curing of the compositions can be conducted in a partial vacuum.

Suitable non-limiting examples of polyamide substrates for the photopolymerizable coating compositions described herein include polyamide 6, polyamide 66, polyamide 66/6, polyamide 12, polyamide 46, polyamide 11, and the like. Polyamides are also commonly referred to as nylons. Both contain the characteristic amide bond and are available in a range of structure varieties. In addition, the polyamides suitable for the photopolymerizable coating compositions described herein can be of a single structure variety or a blend of two or more polyamide structure varieties, for example polyamide 6/66 is a blend of polyamide 6 and polyamide 66. The polyamides can also be blended with other additives, as appropriate to enhance their performance in their intended application. Additives can include non-polyamide polymers, plasticizers, pigments, dyes, nanoparticles, fillers, light stabilizers, and the like. The surface of the polyamide polymer often benefits from cleaning with a solvent prior to application of the photopolymerizable coating composition. A solvent such as acetone can be used.

The invention also provides a method of coating a polyamide substrate, comprising the steps of:
providing a photopolymerizable composition according to the invention;
applying the photopolymerizable composition onto the polyamide substrate; and
exposing the polyamide substrate coated with the photopolymerizable composition to a dose of actinic radiation sufficient to cause the coating to cure.

The invention also provides a method of coating a polyamide substrate, comprising the steps of:
providing a photopolymerizable composition comprising:
   between about 10% to about 99.9% of at least one acid-functional monomer with a molecular weight less than about 240 g/m;
   between about 1% to about 85% of at least one reactive crosslinking monomer; and
   between about 0.1% to about 12% of at least one photoinitiator;
applying the photopolymerizable composition onto the polyamide substrate; and
exposing the polyamide substrate coated with the photopolymerizable composition to a dose of actinic radiation sufficient to cause the coating to cure.

Preferably, said one acid-functional monomer with a molecular weight less than about 240 g/m is selected from the group consisting of vinyl phosphonic acid, hydroxyethyl methacrylate phosphate, hydroxyethyl acrylate phosphate, hydroxyethyl methacrylate sulfonate, methacryloyloxyethyl succinate, methacroyloxyethyl maleate, methacrylic acid, carboxyethyl acrylate, and acrylic acid, and mixtures of the foregoing.

Typically, said acid-functional monomer with a molecular weight less than about 240 g/m is acrylic acid.

Suitably, said reactive crosslinking monomer is selected from a group consisting of 1,3-butylene glycol diacrylate, diethylene glycol diacrylate, 1,6-hexanediol diacrylate, trimethylolpropane triacrylate, pentaerythritol triacrylate, and neopentyl glycol diacrylate.

Preferably, the resin composition further comprises at least one additional component selected from the group consisting of inhibitors, monofunctional monomers, oligomers, surfactants, dyes, plasticizers, light stabilizers, fillers, nanoparticles, waxes, thiols, and combinations of the foregoing.

Generally, between about 10% to about 95% of at least one acid-functional monomer with a molecular weight less than about 240;

Suitably, said one acid-functional monomer with a molecular weight less than about 240 g/m is selected from the group consisting of vinyl phosphonic acid, hydroxyethyl methacrylate phosphate, hydroxyethyl acrylate phosphate, hydroxyethyl methacrylate sulfonate, methacryloyloxyethyl succinate, methacroyloxyethyl maleate, methacrylic acid, carboxyethyl acrylate, and acrylic acid, and mixtures of the foregoing.

Typically, said acid-functional monomer with a molecular weight less than about 240 g/m is acrylic acid.

Preferably, said reactive crosslinking monomer is selected from a group consisting of 1,3-butylene glycol diacrylate, diethylene glycol diacrylate, 1,6-hexanediol diacrylate, trimethylolpropane triacrylate, pentaerythritol triacrylate, and neopentyl glycol diacrylate.

Suitably, the resin composition further comprises at least one additional component selected from the group consisting of inhibitors, monofunctional monomers, oligomers, surfactants, dyes, plasticizers, light stabilizers, fillers, nanoparticles, waxes, thiols, and combinations of the foregoing.

The photopolymerizable coating compositions described herein will now be described in detail by reference to the following non-limiting examples, which are summarized in Table 1:

**Example 1**

Combined were 60 grams acrylic acid (Aldrich Chemical Company), 35 grams hexanediol diacrylate (SR-238 from Sartomer Company), 5 grams Irgacure 184 (Ciba Geigy), and 0.4 grams Coatosil 3503 (Momentive). The components were stirred at room temperature until homogeneous.

A panel of polyamide 12 (EMS Grivory) was first rinsed with acetone to remove any surface contaminants. It was then submersed in the coating solution for 2 minutes, removed, and drained briefly to allow excess coating to drip off. The coated panel was then cured by passing it two times through a belt cure unit (Fusion Systems LC6B with 1800 watt 6 inch H lamp) at 20 meters per minute, once with each side of the panel facing toward the lamp.

The cured coating was glossy and tack-free. The adhesion of the cured coating was evaluated via a cross-hatch tape adhesion test (ASTM D-3359 and ISO 2409) and received a rating of 5B. There were no visible areas of delamination. After boiling in deionized water for thirty minutes the coating was again subjected to the cross-hatch adhesion test and was rated at 4B. The results are summarized in Table 1.

**Comparative Example A**

Combined and stirred until homogeneous were 60 grams of 4-hydroxybutyl acrylate (San Esters Corporation), 35 grams of pentaerythritoltriacrylate (SR-444 from Sartomer Company), 5 grams Irgacure 184, and 0.4 grams Coatosil 3503.

A panel of acetone-rinsed polyamide 12 was soaked in the coating solution for 120 sections then cured as shown in Example 1. The coating cured tack-free but the adhesion to the polyamide was deficient. Significant areas of the coating were delaminated by the adhesive tape in the cross-hatch adhesion test. The cross-hatch tape adhesion test produced a 0B rating. And after treatment for 30 mins in boiling water, parts of the coating had spontaneously delaminated. The cross-hatch adhesion rating was 0B.

**Comparative Example B**

Combined and stirred until homogeneous were 60 grams of trimethyolpropane triacrylate monophosphate ester (Sartomer Company), 35 grams of hexanediol diacrylate, 5 grams Irgacure 184, and 0.4 grams Coatosil 3503.

A panel of acetone-rinsed polyamide 12 was soaked in the coating solution for 120 sections then cured as shown in Example 1. The coating cured tack-free but the adhesion to the polyamide was deficient. Areas of the coating were delaminated by the adhesive tape in the cross-hatch adhesion test. The cross-hatch tape adhesion test produced a 1B rating. And after treatment for 30 mins in boiling water, the cross-hatch adhesion rating was 0B.

**Example 2**

Combined were 60 grams monohydroxyethylacrylate ester of succinic acid (Sartomer Company), 25 grams of trimethyolpropane triacrylate (SR-351 from Sartomer), 10 grams of aliphatic urethane acrylate (CN-968 from Sartomer), 5 grams of Irgacure 184 (Ciba Geigy) and 0.4 grams of TegoRad 2250 (Evonik).

A panel of acetone-rinsed polyamide 12 was soaked, drained and cured as described in Example 1. The cured coating was glossy, tack-free and showed good adhesion to the polyamide substrate. A few small chips could be seen in the coating following the cross-hatch test. The cross-hatch tape adhesion test gave a 4B rating. After treatment for 30 mins in boiling deionized water, the cross-hatch adhesion remained 4B.

**Example 3**

Combined were 25 grams beta-carboxyethyl acrylate (Aldrich), 35 grams acrylic acid, 20 grams of trimethyolpropane triacrylate, 10 grams of CN-968 aliphatic urethane acrylate, 6 grams of Acematt A-607 (Evonik), 5 grams of Irgacure 184 (Ciba Geigy) and 0.4 grams of Coatosil 3503.

A panel of acetone-rinsed polyamide 12 was soaked, drained and cured as shown in Example 1. The cured coating had a matte appearance and a 60° gloss of 15%. The coating was tack-free and showed very good adhesion to the polyamide substrate. The cross-hatch tape adhesion test produced a 4B rating. After treatment for 30 mins in boiling deionized water, the cross-hatch adhesion remained 4B.

While the invention herein disclosed has been described by means of specific embodiments and applications thereof, numerous modifications and variations could be made thereto by those skilled in the art without departing from the scope of the invention set forth in the claims.

**Table 1: Summary of Example test results**

| | **Ex 1** | **Ex 2** | **Ex 3** | **Comp A** | **Comp B** |
|---|---|---|---|---|---|
| Surface of Cured Panel | Glossy Tack-free | Glossy Tack-free | Matte Tack-free | Glossy Tack-free | Glossy Tack-free |
| Initial X-hatch Adhesion Test | 5B | 4B | 4B | 0B | 1B |
| X-hatch Adhesion Test after 30 min in boiling water | 4B | 3B | 4B | 0B | 0B |

## Claims

1. A photopolymerizable coating composition with improved adhesion to polyamide substrates, said composition comprising:
between about 10% to about 99.9% of at least one acid-functional monomer with a molecular weight less than about 240 g/m;
between about 1% to about 85% of at least one reactive crosslinking monomer; and
between about 0.1% to about 12% of at least one photoinitiator,
wherein the reactive crosslinking monomer contains two or more acrylate or methacrylate functional groups..

2. A photopolymerizable coating composition according to claim 1, wherein said one acid-functional monomer with a molecular weight less than about 240 g/m is selected from the group consisting of vinyl phosphonic acid, hydroxyethyl methacrylate phosphate, hydroxyethyl acrylate phosphate, hydroxyethyl methacrylate sulfonate, methacryloyloxyethyl succinate, methacroyloxyethyl maleate, methacrylic acid, carboxyethyl acrylate, and acrylic acid, and mixtures of the foregoing.

3. A photopolymerizable composition according to claim 1, wherein said acid-functional monomer with a molecular weight less than about 240 g/m is acrylic acid.

4. A photopolymerizable composition according to claim 1, wherein said reactive crosslinking monomer is selected from a group consisting of 1,3-butylene glycol diacrylate, diethylene glycol diacrylate, 1,6-hexanediol diacrylate, trimethylolpropane triacrylate, pentaerythritol triacrylate, and neopentyl glycol diacrylate.

5. A resin composition according to claim 1, further comprising at least one additional component selected from the group consisting of inhibitors, monofunctional monomers, oligomers, surfactants, dyes, plasticizers, light stabilizers, fillers, nanoparticles, waxes, thiols, and combinations of the foregoing.

6. A photopolymerizable coating composition according to claim 1, wherein between about 10% to about 95% of at least one acid-functional monomer with a molecular weight less than about 240;

7. A photopolymerizable coating composition according to claim 6, wherein said one acid-functional monomer with a molecular weight less than about 240 g/m is selected from the group consisting of vinyl phosphonic acid, hydroxyethyl methacrylate phosphate, hydroxyethyl acrylate phosphate, hydroxyethyl methacrylate sulfonate, methacryloyloxyethyl succinate, methacroyloxyethyl maleate, methacrylic acid, carboxyethyl acrylate, and acrylic acid, and mixtures of the foregoing.

8. A photopolymerizable composition according to claim 6, wherein said acid-functional monomer with a molecular weight less than about 240 g/m is acrylic acid.

9. A photopolymerizable composition according to claim 6, wherein said reactive crosslinking monomer is selected from a group consisting of 1,3-butylene glycol diacrylate, diethylene glycol diacrylate, 1,6-hexanediol diacrylate, trimethylolpropane triacrylate, pentaerythritol triacrylate, and neopentyl glycol diacrylate.

10. A resin composition according to claim 6, further comprising at least one additional component selected from the group consisting of inhibitors, monofunctional monomers, oligomers, surfactants, dyes, plasticizers, light stabilizers, fillers, nanoparticles, waxes, thiols, and combinations of the foregoing.

11. A method of coating a polyamide substrate, comprising the steps of:
providing a photopolymerizable composition according to any of Claims 1 to 10;
applying the photopolymerizable composition onto the polyamide substrate; and
exposing the polyamide substrate coated with the photopolymerizable composition to a dose of actinic radiation sufficient to cause the coating to cure.

12. A method of coating a polyamide substrate, comprising the steps of:
providing a photopolymerizable composition comprising:
between about 10% to about 99.9% of at least one acid-functional monomer with a molecular weight less than about 240 g/m;
between about 1% to about 85% of at least one reactive crosslinking monomer; and
between about 0.1% to about 12% of at least one photoinitiator;
applying the photopolymerizable composition onto the polyamide substrate; and
exposing the polyamide substrate coated with the photopolymerizable composition to a dose of actinic radiation sufficient to cause the coating to cure.

13. The method of coating a polyamide substrate of claim 12, wherein said at least one one acid-functional monomer with a molecular weight less than about 240 g/m is selected from the group consisting of vinyl phosphonic acid, hydroxyethyl methacrylate phosphate, hydroxyethyl acrylate phosphate, hydroxyethyl methacrylate sulfonate, methacryloyloxyethyl succinate, methacroyloxyethyl maleate, methacrylic acid, carboxyethyl acrylate, and acrylic acid, and mixtures of the foregoing.

14. The method of coating a polyamide substrate of claim 12, wherein said acid-functional monomer with a molecular weight less than about 240 g/m is acrylic acid.

15. The method of coating a polyamide substrate of claim 12, wherein said reactive crosslinking monomer is selected from a group consisting of 1,3-butylene glycol diacrylate, diethylene glycol diacrylate, 1,6-hexanediol diacrylate, trimethylolpropane triacrylate, pentaerythritol triacrylate, and neopentyl glycol diacrylate.
